# EUROPEAN PATENT SPECIFICATION

(11) **EP 2 841 462 B1**
(45) Date of publication and mention of the grant of the patent: **06.07.2016**
(21) Application number: 13724511.4
(22) Date of filing: 25.04.2013
(51) Int. Cl.: C08B 37/08

(54) **CROSSLINKED HYALURONAN DERIVATIVE, METHOD OF PREPARATION THEREOF, HYDROGEL AND MICROFIBERS BASED THEREON**
VERNETZTES HYALURONANDERIVAT, VERFAHREN ZUR HERSTELLUNG DAVON, HYDROGEL UND MIKROFASERN AUF BASIS DAVON
DÉRIVÉ D'HYALURONANE RÉTICULÉ, SON PROCÉDÉ DE PRÉPARATION, HYDROGEL ET MICROFIBRES À BASE DU DÉRIVÉ

(30) Priority: 25.04.2012 CZ 20120282
(43) Date of publication of application: 04.03.2015
(73) Proprietor: CONTIPRO PHARMA, A.S., 561 02 Dolni Dobrouc (CZ)
(72) Inventor: HUERTA-ANGELES, Gloria, 56002 Ceska Trebova (CZ); JOUKLOVA, Zuzana, 57001 Litomysl (CZ); PRIKOPOVA, Eva, 56164 Techonin (CZ); VELEBNY, Vladimir, 56401 Zamberk (CZ)
(74) Representative: Dvorakova, Martina
(86) International application number: PCT/CZ2013/000057
(87) International publication number: WO 2013/159757

(56) References cited:
- EP-A2- 2 399 940
- WO-A1-02/18450
- WO-A1-2010/051783
- WO-A2-2011/069474
- JUNSEOK YEOM ET AL: "Effect of Cross-Linking Reagents for Hyaluronic Acid Hydrogel Dermal Fillers on Tissue Augmentation and Regeneration", BIOCONJUGATE CHEMISTRY, vol. 21, no. 2, 17 February 2010 (2010-02-17), pages 240-247, XP055045386, ISSN: 1043-1802, DOI: 10.1021/bc9002647

## Description

### FIELD OF THE INVENTION

The present invention relates to the process of crosslinking of modified hyaluronic acid (HA), which is catalyzed by a homogeneous palladium catalyst stable in water, and optionally a base. The process consists of synthesis of derivatives which can be used as suitable precursors for carbon-carbon or cross coupling reaction. These precursors are applicable for the synthesis of hydrogels, as well as for cross-linking of microfibers made of derivatives thereof.

### STATE OF THE ART

Hyaluronic acid (HA or Hyaluronan) is a member of a class of polymers known as glycosaminoglycans. HA is a long chain linear polysaccharide and is usually present as the sodium salt which has the molecular formula of (C₁₄H₂₀NNaO₁₁)ₙ and the molecular weight can vary according to the source, isolation procedure and method of determination. However, molecular weights of up to 14×10⁶ have been reported. The molecular weight mentioned herein is the weight average molecular weight, unless indicated otherwise.

HA is non-immunogenic and therefore has a great potential in medicine. Because of its visco-elastic properties, HA having a high molecular weight (over 1 million) has been found to be particularly useful in a variety of clinical fields, including wound treatment, ophthalmic surgery and orthopaedic surgery. HA is also potentially useful in a variety of non-medical fields, such as cosmetic applications.

However, the use of HA in certain of these applications is limited by the fact that following the administration to humans HA is readily degraded by enzymes such as hyaluronidases and free radicals. Furthermore, HA is soluble in water at room temperature, which can also make it less suitable for certain applications. To increase the viscosity or to obtain a cross-linked derivative, an external agent must be used.

Various attempts have therefore been made to prepare more stable forms of HA, in particular by cross-linking. For example, U.S. Patent. No. 4,582,865 describes the preparation of cross-linked gels of hyaluronic acid by using divinylsulfone as the cross-linking agent; but the crosslinked material may encapsulate free divinyl-sulfone that is potentially toxic and pyrogenic as described later in US Patent 7131492. Other examples of HA based hydrogels, have been obtained by cross-linking agents such as butanediol diglycidyl ether or glutaraldehyde (Collins & Birkinshaw, 2007). However, there have been several reports of allergic reactions to these products (Matarasso & Herwick, 2006). This patent application overcomes some disadvantages which have been reported in crosslinking, more specifically, the fact that the cross-linking sometimes fails and a second cross-linking agent must be used, which generally is a highly reactive reagent, so that a direct modification of the polysaccharide and cross-linking in a second step is preferred (Schanté, Zuber, Herlin & Vandamme; Yeom et al.). The preparation of HA is also disclosed in WO 2010/051783. In the prior art, other crosslinking agents that comprise a metal, transition metal, metalloid, herein collectively referred to as a "metal" have been described. Examples include boron, aluminum, zirconium, magnesium, iron, cooper, lead or titanium (US 20010002411). Generally, the metal interacts with at least two gelling molecules to form a chemical bond between them. Many of these reported crosslinking agents have drawbacks associated with their use. For instance, boron-containing crosslinking agents are limited to be used in pH 8 and require the use of external salts to be included in the reaction mixture. Moreover, boron reacts with hydroxyls present in the macromolecule or with additives such as alcohols or glycols used for additional treatment and isolation of the reaction products. Titanium also has disadvantages, such as a high cost and slow kinetics of cross-linking. Zirconium based crosslinking agents have also drawbacks; e.g. the incapability for crosslinking xanthan, which is a common gelling agent used in formulations (US-20080207470).

Other ways of cross-linking to form hydrogels involve non-covalent bonds and use multiple charged ions, such as iron, copper, zinc, calcium and other chelating ions, as reported in US-7807656-B2. However, the inserted metals may have some unknown toxicological effects.

The cross-linking is not exclusive for the formation of hydrogels but also can be applied to the obtention of insoluble microfibers. Instead, microfilaments (or fibers) made of native hyaluronic acid were recently described in document US 20100310631, and they have the property of being fully soluble in water. Besides that, materials based on hyaluronic fibers were obtained by cross-linking of hyaluronic acid in the presence of cross-linkers of the carbodiimide and epoxide type (cross-linking agents, a non-exhaustive list of which is for example mentioned in US-2007066816). These materials, however, possess the non-negligible disadvantage of being toxic for humans, which severely limits all uses thereof in vivo.

During the last few years, enormous efforts have been made in the area of transition metal-mediated organic syntheses. In this respect, a carbon-carbon coupling reaction is a concept involving a variety of reactions wherein two hydrocarbon fragments are coupled with the aid of a metal catalyst. Two types of coupling reactions are recognized: *cross-coupling* that involves the reaction of two different partners and *homocoupling* that couple together two identical partners. Transition metals have a unique ability to activate various organic compounds and through this activation they can catalyze the formation of new bonds. The principle of palladium-catalyzed cross couplings is that two molecules are assembled on the metal via the formation of metal-carbon bonds. In this way the carbon atoms bound to palladium are brought very close to one another. In the next step they couple to one another and this leads to the formation of a new carbon-carbon single bond. This is illustrated on Scheme 1 below:

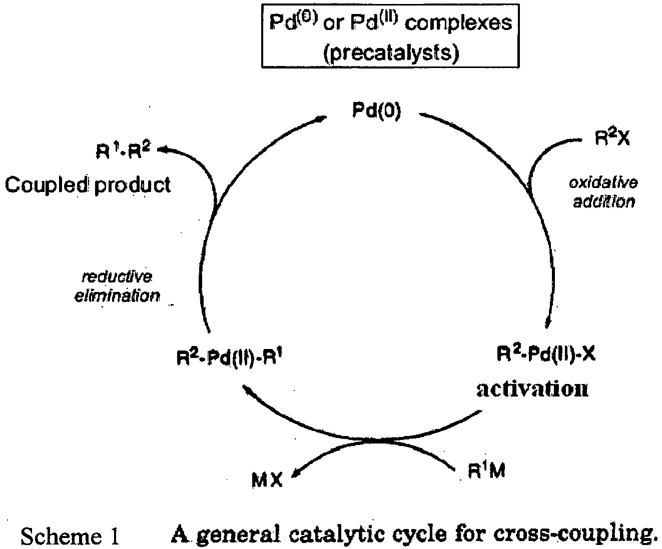

Palladium catalyzed cross-coupling reaction was applied for example to the synthesis of sugar rods and later on for carbohydrate clusters (Roy, Das, Santoyo-González, Hernández-Mateo, Dam & Brewer, 2000). Some examples of this type of chemistry were described in a series of articles by Vasella *et al* (Murty & Vasella, 2001). However, this useful reaction has scarcely been used in carbohydrate or polysaccharide chemistry. The international patent application number WO-9014353 reported the palladium-mediated coupling of oligonucleotides for diagnostic and therapeutic proposes. A novel palladium-mediated carbon-carbon bond was disclosed in WO/2007/008226 for its use in formation of DNA-templated chemistry.

Herein, we describe a new way of cross-linking of HA by means of a palladium catalyzed cross-coupling reaction. The reaction can be effected without the use of special additives, such as other metals, e.g. copper. The reaction may be carried out in water or phosphate buffers, as well as in mixtures of alcohols and common organic and inorganic non- expensive bases and acids. The optimization of conditions has shown that the reaction requires a very low amount of catalyst, relatively low temperatures and short reaction time. After cross-linking, the products, herein named hydrogels and microfibers, were extensively washed in order to eliminate residual palladium. Surprisingly, the effective elimination of the catalyst has ensured the potential application of the reaction to form insoluble materials for applications in pharmaceutical and in general for human use, thus, the cross-coupling reaction leads to a real innovation in the field of modification chemistry of bioactive polysaccharides.

### SUMMARY OF THE INVENTION

This invention relates to a method of cross-linking polysaccharides, and more specifically, hyaluronic acid. As discussed above, the present invention provides a method to form insoluble derivatives of hyaluronic acid. More specifically, the process concerns the preparation of multiple crosslinked hydrogels or microfibers based on a chemically modified HA. The present methodology describes an effective preparation of hydrogels based on hyaluronic acid, as well as, this methodology can be applied to cross-link micro-fibers based on modified HA. The process of preparation of the crosslinked hyaluronan derivative, is carried out by a C-C coupling reaction in water, phosphates buffer or a mixture of an organic acid and an alcohol, and in the presence of a palladium active catalyst, wherein the C-C coupling reaction takes place between a hyaluronan derivative carrying a terminal aryl-halide and/or aryl-borate group, and a hyaluronan derivative carrying an alkenyl or alkynyl group.

Fibers in accordance to the present disclosure are prepared by wet-spinning or extruding a mixture of the first and second precursors each having at least one functional group known to have the reactivity for cross-coupling reaction. Known spinning apparatuses can be used for the production of filaments. Cross-linked materials formed in accordance to the present disclosure may be made by the reaction of a functionalized first precursor with the second precursor which causes the two precursors to have covalent bonds between them, catalyzed by a palladium active catalyst. In other words, the method comprises covalent bonding of HA to another molecule of HA via carbon-carbon coupling. In yet other words, a variant of Sonogashira reaction was applied to the cross-linking of hyaluronic acid in an aqueous media.

The problem solved by this invention is the obtention of hydrogels and microfibers based on hyaluronic acids that are insoluble in water, in a simple, cheap and an efficient way, which would be suitable for in vivo use. This problem is solved by using a palladium catalyst that can be eliminated after the suitable precursors undergo cross-linking. The use of hyaluronic acid is preferred because the obtained material is biocompatible and absorbable. The hydrogels obtained by the present methodology posses a 3D-structure and interconnected pores. Moreover, the microfibers crosslinked by the methodology have shown a high improvement of mechanical properties compared to those of the non-crosslinked fibers. Unlike before cross-linking, the microfiber is insoluble in water. The crosslinked materials reported in this patent application may also be incorporated in applications requiring a viscoelastic gel. Cross-linked fibers prepared in the present application may be used for a variety of surgical and wound healing applications, as well as a part of medical devices. Further objects will become obvious on the basis of the following description and claims.

In a first embodiment, the present invention provides a method for crosslinking derivatives of hyaluronic acid, leading to crosslinked HA-based derivatives represented by the formulae (A) or (B): 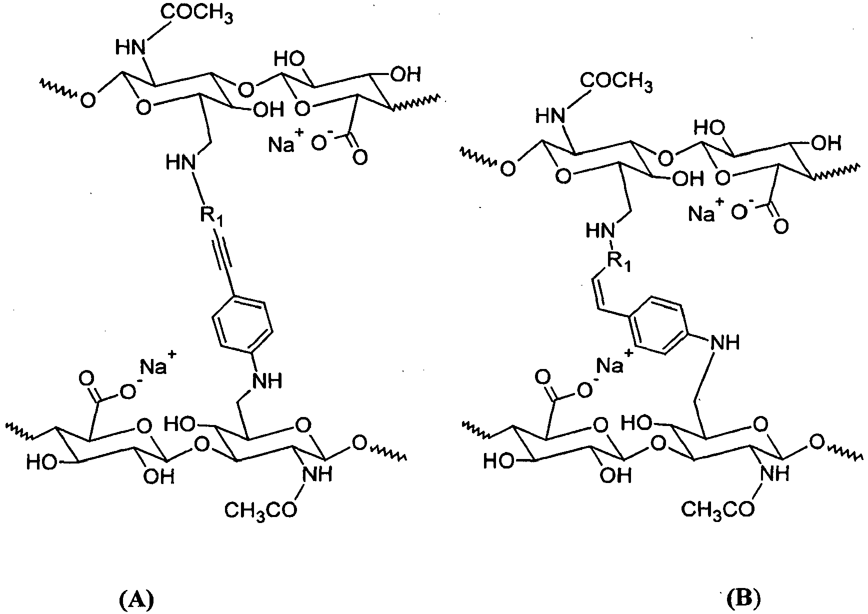 wherein R₁ is an aliphatic C₁₋₁₅ substituent which may be in both derivatives the same or different. A non-limiting example of R₁ is methylene or ethylene.

Furthermore, the invention relates to the process of preparation of the derivatives for the crosslinking reaction, comprising the steps of:
i) Preparation of a secondary amine hyaluronan derivative carrying a terminal aryl substituent, also called the first precursor, according to the formula (I): 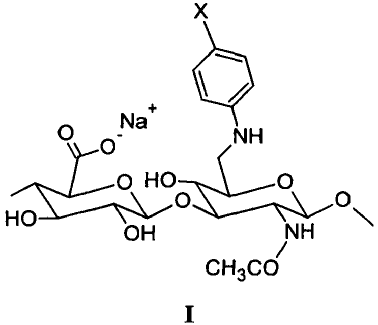 wherein X is a halogen or a borate functional group. A non-limiting example of X is -I , -Br or B-(OH)₃. In other words, step i) comprises preferably the steps of a) oxidation of hyaluronan in the C-6 position, and b) coupling a primary aromatic amine carrying a terminal substitute, which can preferably be bromide, iodine or boron-containing terminal group, to obtain components of the type (I). The primary amines are aromatic of the type of p-substituted anilines to obtain derivatives of the type (I), which are substrates for the cross-coupling reaction described in step iii) below, so that, the use of iodine (Ia), bromine (Ib), or borates (Ic) as a terminal group in the chemically modified hyaluronic acid provide components that may allow an effective modulation of the cross-coupling reaction. As far as we know, the *para*-substituent of the aromatic ring affects and may change the oxidative addition step of the catalytic cycle (Scheme 1 above). In other words, the first component (I) can change the kinetics of cross-linking, so that the gelation can vary with respect to the rate, time, temperature, yield, and may increase the scope of the cross-coupling reaction. These favourable characteristics are typically attributed to the leaving group ability of substituent attached in the position *para* of the aryl substitute -X, which is believed to control the rate of cross-linking of the first precursor (I) with the second precursor of the type II or III.

Step ii) is the preparation of a secondary amine hyaluronan derivative carrying an unsaturated compound that contains triple or double bonds, also called a second precursor, of the formula **(II)** or **(III):** 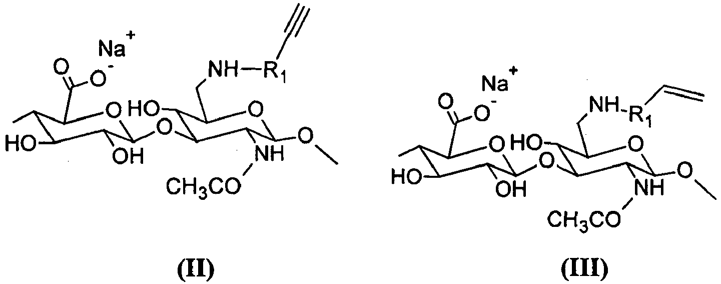 wherein R₁ is specified above. The chemical modification of hyaluronic acid in step ii) preferably comprises the steps of a) oxidation of hyaluronan in the C-6 position and b) attaching an aliphatic primary amine into the polysaccharide backbone, carrying a terminal unsaturated group which can be alkyne (II) or alkene (III), e.g. propargyl amine or butynyl amine for (II) or alkenyl groups such as allyl amine for (III), while alkynes (II) are usually more reactive than alkenes (III). The rate of cross-linking and the final properties of the material can be tailored by the reactivity of the second precursors II or III.

The further step, step iii) involves a "palladium active catalyst" catalyzed coupling of terminal alkynes (II) or alkenes (III) with aryl, vinyl halides or boranes of the derivative of (I) to cross-link via formation of carbon-carbon bonds. This reaction can be called a cross-coupling reaction as well. Therefore, step iii) consists in mixing the derivative of the formula (I) with the derivate of the formula II (or III), and the palladium active catalyst to perform cross-coupling of the hyaluronic acid. The cross-linked product is characterized by the formulae depicted in schemes A or B above. Cross-coupling is somewhat arbitrarily defined by the equation shown in Scheme 2, where R₁ and R₂ are HA derivatives with aryl or vinyl groups and X is a halogen atom or a related heteroatom leaving group. Metals (M) are defined as all elements except of H, C, and Groups 15-18 elements.

R₁-M + R₂-X →R₁-R₂ +M-X Scheme 2

In this case, a distinction between cross-coupling and homo-coupling should be made. Those reactions that give mostly statistical or random mixtures of R₁R₂, R₁R₁, and R₂R₂ should probably be excluded from cross-coupling.

As described herein, the reaction may involve or not the use of a catalytic amount of Cu (I) salts, and is usually considered as a cross-coupling reaction. The cross-coupling reaction as described in Scheme 2 and characterized by the catalytic cycle described in Scheme 1 is applied in the step iii) for the obtention of cross-linked materials. Cross-coupling involves the reaction between a terminal halide and/or aryl-borate and an unsaturated group such as alkenyl or alkynyl derivative catalyzed by a palladium active catalyst which may preferably be a complex of palladium (II) acetate and an inorganic or organic base, or a complex of palladium (II) and 2-amino-4,6-dihydroxypyrimidine, while the concentration of the palladium active catalyst in the reaction mixture may be within the range from 1x10⁻⁵ to 1x10⁻³ M. It was found out that for the preparation of a crosslinked HA derivative in the form of a hydrogel, it is preferred to use as the palladium active catalyst the complex of palladium (II) acetate and an inorganic or organic base, such as DABCO, TEMED, TEA, secondary phosphates such as K₂HPO₄, carbonates, such as CsCO₃, more preferably TEMED or DABCO, while the preferred concentration of such palladium active catalyst in the reaction mixture is within the range from 1x10⁻⁴ to 1x10⁻³ M, preferably 5x10⁻⁴.

For the preparation of a crosslinked HA derivative in the form of microfibers, the derivative of the formula (I) is mixed with the derivative of the formula (II) or (III) and the mixture is extruded into a coagulation bath, and then the microfibers are transferred to the crosslinking bath containing a palladium active catalyst. It was found out that the preferred palladium active catalyst for the crosslinking of microfibers is a complex of palladium (II) and 2-amino--4,6-dihydroxypyrimidine and the preferred concentration thereof in the crosslinking bath is within the range from 1x10⁻⁵ to 1x10⁻⁴ M, preferably 5x10⁻⁵. The coagulation bath may consist of a mixture of an alcohol and an organic acid, while, however, any coagulation bath suitable for the production of HA-based microfibers may be used, and the crosslinking bath consists of a mixture of an alcohol, e.g. methanol, ethanol or isopropanol, and lactic acid and the palladium active catalyst. The preferred composition of the crosslinking bath is lactic acid and isopropanol within the ratio of 1:1 to 1:5, preferably 1:4.

To perform the cross-coupling reaction, the polymer must have at least one leaving group (halogenide, boron-containing group) and one unsaturated (alkene or alkyne) moiety per macromolecule.

The cross-coupling reaction is graphically represented in Scheme 3 for the case of alkynes, Scheme 4 for alkenes.

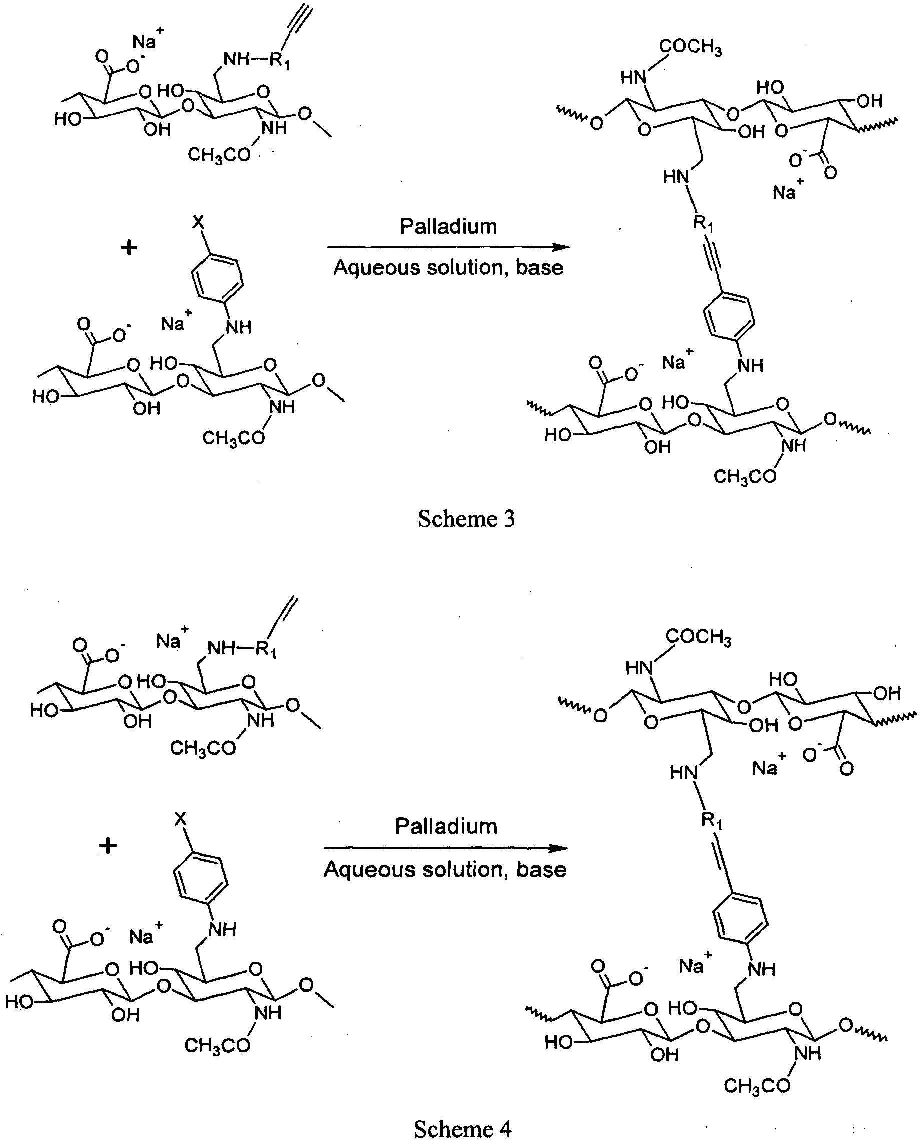

### BRIEF DESCRIPTION OF THE DRAWINGS

**Figure 1** shows the ¹H NMR spectra of the product Ib as described in Example 2.
**Figure 2** shows the ¹H NMR spectra of the product IIb as described in Example 5.
**Figure 3** depicts a SEM microstructure of the crosslinked material described in example 8 (using TEMED).
**Figure 4(a)** shows the gelation point determined at (25°C) and **Figure 4(b)** shows the gelation point determined at 60°C for the crosslinking of derivatives Ia and IIa, as described in Example 8, wherein TEMED is used as a base.
**Figure 5** depicts a SEM microstructure of the crosslinked material described in example 12, wherein the reaction was carried out using K₂HPO₄ buffer.
**Figure 6** depicts a SEM microstructure of crosslinked material described in example 10, wherein DABCO is employed as a base.
**Figure7** shows the microstructure of microfibers prepared with the derivatives described in examples 2 and example 4, wherein the concentration of both derivatives is 12%. Figure 7a shows the microstructure of the fiber before the cross-coupling reaction and Figure 7b shows the microstructure after cross-coupling.
**Figure 8** shows the microstructure of microfibers prepared of the derivatives described in example 2 and example 4, wherein the concentration of both derivatives is 14%. Figure 8a shows the microstructure of the fiber before cross-coupling and Figure 8b shows the microstructure after cross-coupling.
**Figure 9** shows the microstructure of microfibers prepared of the derivatives described in example 2 and example 4, wherein the concentration of both derivatives is 15%. Figure 9a shows the microstructure of the fiber before cross-coupling and Figure 9b shows the microstructure after cross-coupling.
**Figure 10** depicts the swelling degree versus time of the fibers prepared in examples 16, 17 and 18 after immersion in PBS. The average diameter was measured as a function of time determined by an optical microscopy.
**Figure 11** is the graphical representation of the tested biocompatibility of the microfibers prepared in example 17.
**Figure 12** shows the tension strength of the microfibers prepared in example 18.

### DEFINITIONS

In this description, certain expressions are used rather frequently as they relate to important technical aspects of features or embodiments. For some of these expressions, the following definitions should be used unless the specific context in which they are used requires a different interpretation.

As used herein, hyaluronic acid refers to both the polysaccharide in its form of a polycarboxylic acid and its salts, such as sodium, potassium, magnesium and calcium salt and can have a weight average molecular weight ranging from 50,000 to 3,000,000 Da.

As used herein, the degree of substitution, in case of a polysaccharide backbone, is defined as the reactive moieties per 100 saccharide dimers (in this case the polysaccharide being hyaluronic acid), i.e. representing the number of dimers which were chemically modified.

As used herein, a crosslinked material is a three-dimensional polymeric network made by chemical crosslinking of one or more hydrophilic polymers. This derivative is able to swell but does not dissolve in contact with water.

As used herein, a microfiber or fiber is a component that has an evident longitudinal axis or axial geometry, and further has at least one spatial dimension that is less than about 1,000 µm (i.e., 1 mm), optionally less than or equal to about 100 µm (i.e., 100,000 nm). The term "micro-sized" or "micrometer-sized" as used herein is generally understood by those of skill in the art to mean less than about 500 µm (i.e., 0.5 mm).

As described herein, palladium active catalyst is a complex of palladium (II) and a base or a complex of palladium (II) and 2-amino-4, 6-dihydroxypyrimidine which is used to catalyze the cross-coupling reaction and allows the storage of a solution of palladium. The reaction may or may not to require to be carried out under inert atmosphere.

The bases which may be used for the cross-coupling reaction include organic or inorganic bases, e.g. DABCO (1, 4-diazabicyclo [2.2.2] octane), TEMED or TMEDA (N, N, N', N'-tetramethyl-ethane-1,2-diamine), TEA (triethylamine), secondary phosphates such as K₂HPO₄, carbonates such as CsCO₃ etc.

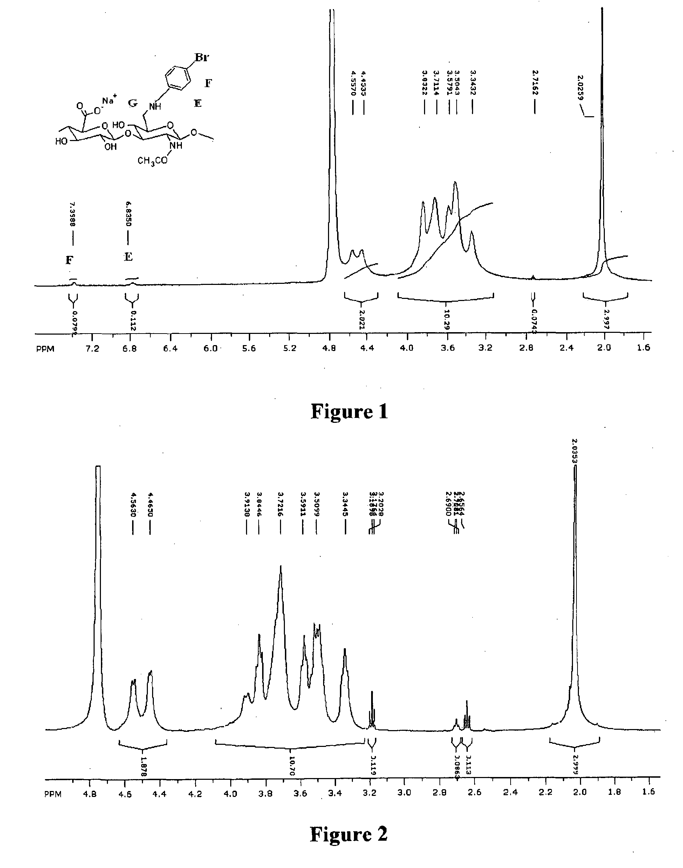

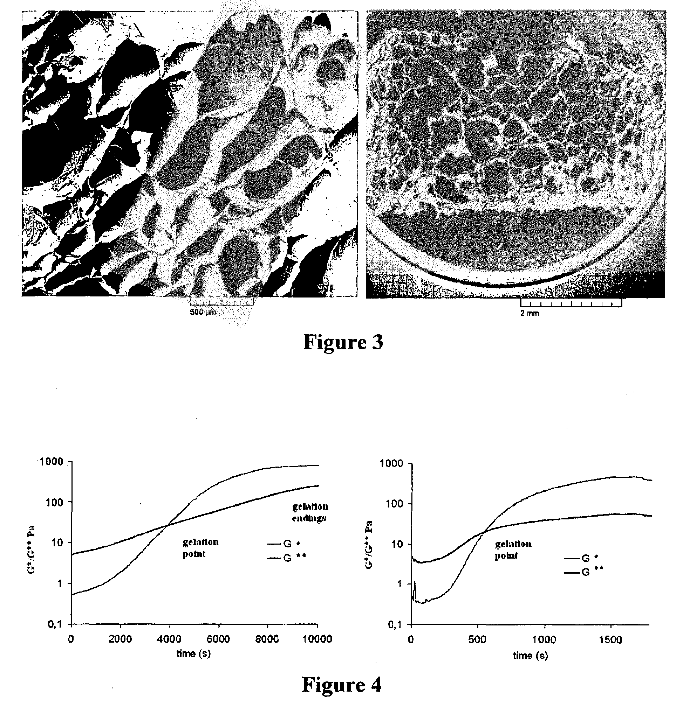

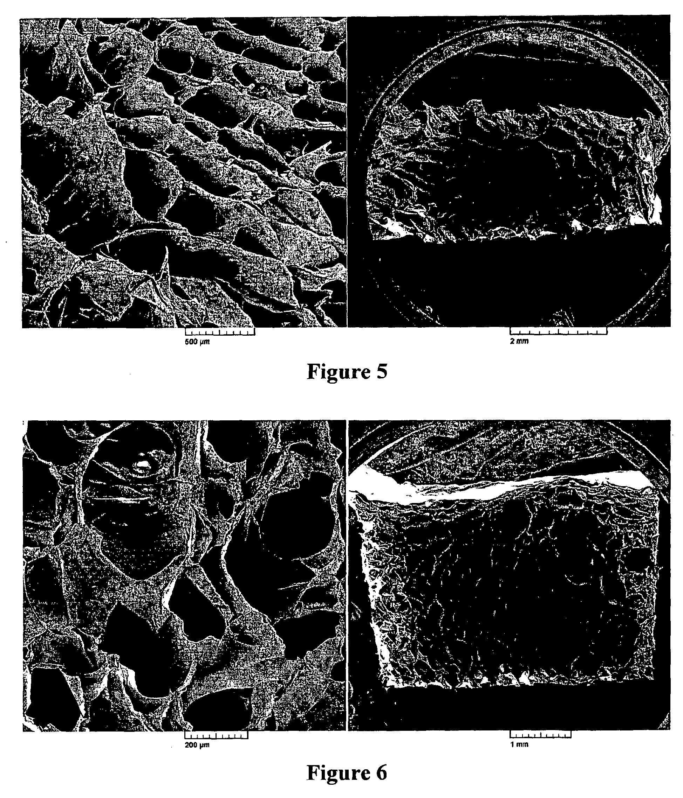

As described before, the chemical modification of hyaluronic acid was carried out by "oxidation and reductive amination" to obtain derivatives of the types I, II or III. Furthermore, the chemical modification can vary from 8 till 15%, depending on the reaction conditions. For example, Figure 1 shows the ¹H NMR spectra of chemically modified HA of the type Ib characterized by DS of 6%. Figure 2 shows the ¹H NMR spectra of chemically modified HA of the type II and DS of 12%. The cross-coupling reactive moieties are connected to the polymeric backbone by a linker comprising a stable secondary amine bond; as used herein, a secondary amine is represented by the formula -C-NH-R, wherein R means any carbon chain. The gelation was monitored by the measurement of dynamic visco-elastic data collected during the course of the cross-linking reaction. The evolution of the system into a viscoelastic solid was clearly revealed, as shown in Figure 4 A for cross-linking at 25°C and B at 60°C, respectively. The polymeric components were first mixed in a vial. The palladium (II) catalyst and the base were added to the polymeric solution and vortexed. The solution was rapidly transferred to the rheometer and gelation was *determined in situ.* The rheometric measurements were performed in order to assess the reaction kinetics (time necessary for crosslinking / gelation) and to prove that the crosslinking / gelation occurs. During the cross-linking reaction oscillatory sweep movements were applied at a frequency of 5 Hz. Typical results for the experiment are shown in Figure 4A and B. The aim of the rheological measurements was to characterize the course of the palladium-catalyzed crosslinking process of the HA-based gels in terms of "gel points", i.e., the time at which G*=G**, wherein G* is defined as the storage modulus or elastic modulus and G** is defined as the loss modulus. If the curves of G* and G** as a function in time cross (i.e. G*=G**), it means that the material undergoes gelling. The results indicate that for the two gels, the cross-linking process is characterized by a relatively short time 660 s where the gelation was carried out at 60°C (Figure 4B), which prolongs to 4000 s where the gelation was carried out at 25°C (Figure 4A). Figures 3, 5 and 6 show the microstructure of the crosslinked material (dried scaffold). DABCO, identified chemically as 1, 4-diazabicyclo [2.2.2] octane, was found to be an effective ligand for Sonogashira reaction. Thus, 1, 4-diazabicyclo [2.2.2] octane (Figure 6) had produced uniform porosity and smaller size of pores in comparison to Tetramethylethylenediamine (TMEDA or TEMED) (Figure 3). The structure of the crosslinked samples using K₂HPO₄ as a base was studied as well (Figure 5), wherein the use of K₂HPO₄ is preferred due to the non toxicity of the base. According to the SEM micrograph, it is evident that the base plays a crucial role during the crosslinking of HA. Reaction conditions have a strong effect on the hydrogel microstructure. The porosity of the scaffolds was determined as 300 to 900µm.

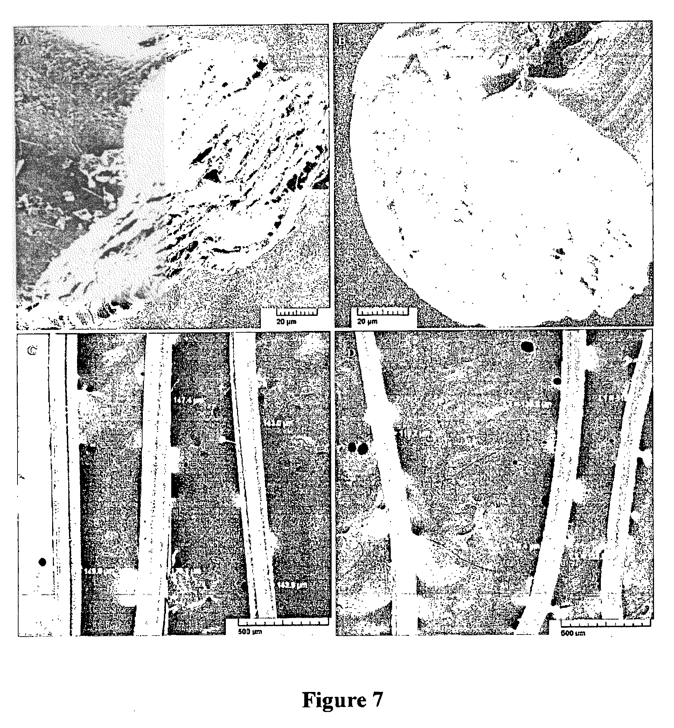

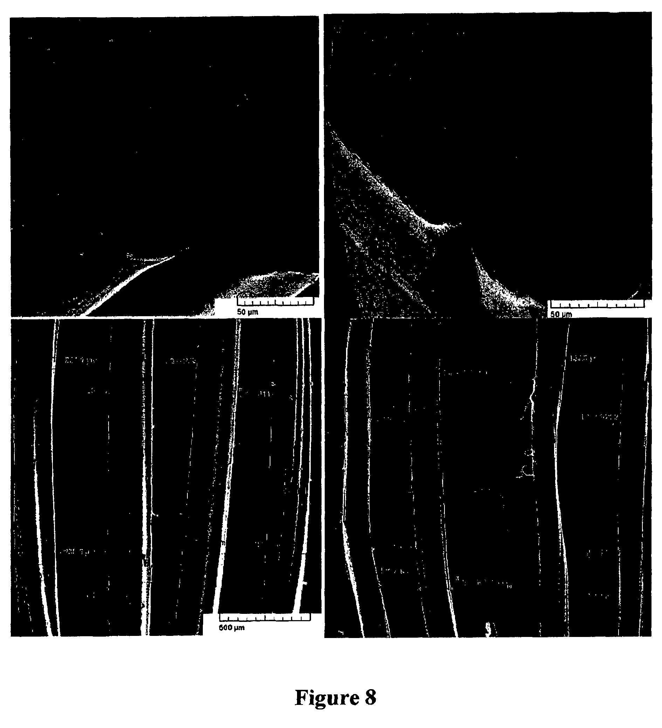

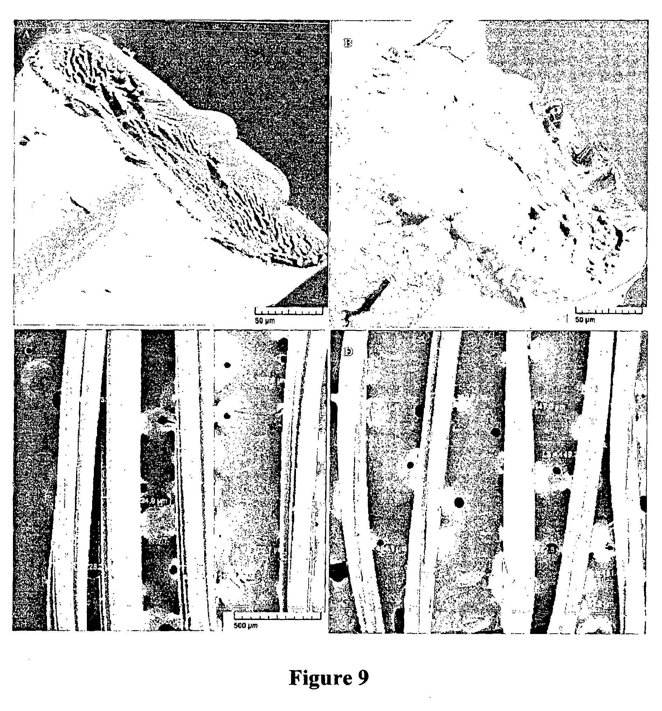

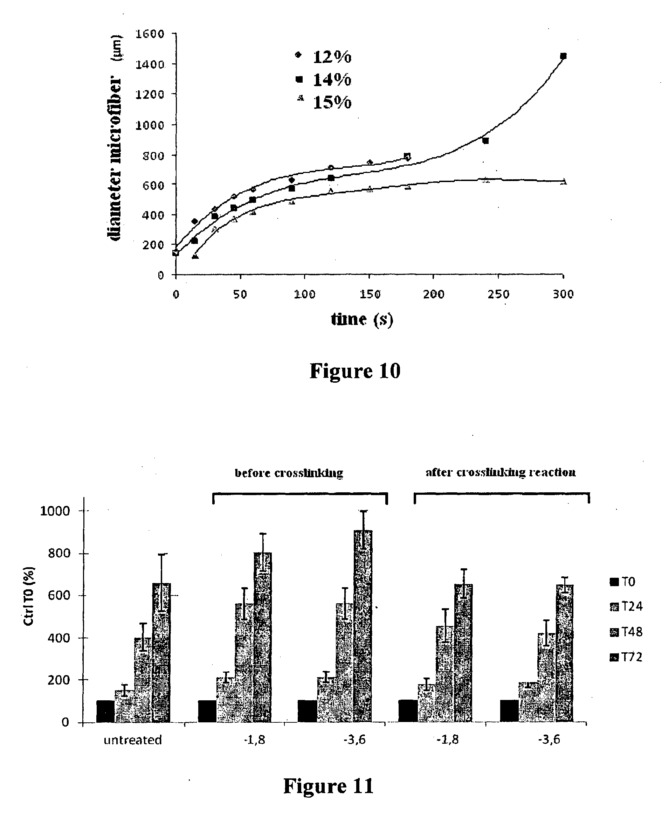

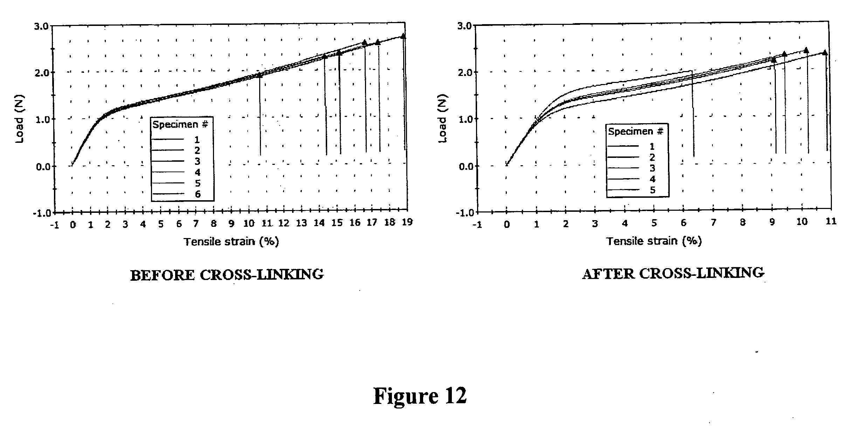

The crosslinking reaction as described in step iii) can as well be applied to the formation of microfibers which are insoluble in water. Microfibers composed of derivatives (I) and (III) or (II) are characterized by a diameter of 100-250 µM and a round cross-section and have been produced by wet-spinning; thereafter these microfibers underwent crosslinking catalyzed by palladium (II) acetate or palladium active catalyst. The process for the preparation of microfibers and crosslinking comprises the following steps: a) The derivative of the type of (II) or (III) is mixed together with the derivative of the type (I), dissolved in water or phosphates buffers forming just a simple physical mixture. Polymeric solutions consisting of components (I+III) or (II + III) were prepared from 1 to 15% by weight of solid modified HA, depending on the final use of the reaction, wherein from 1 to 5% composition is preferred for hydrogels (Examples 7 to 15) and 12-15% is preferred for microfibers (Examples 16-18). The specific concentration of the components used as described herein for the cross-linking of microfibers has produced fibers with higher tension strength. b) The physical mixture of derivatives in concentrations as described in examples 16-18 for the obtention of cross-linked microfibers were prepared at least 24 hours before spinning. c) Fibers were prepared by a wet-spinning process; d) after that, the fiber was dried and e) transferred to a second bath (crosslinking bath) wherein the fiber was crosslinked by cross-coupling for 2 hours, using a high temperature within the range of 40-80 °C, preferably 60°C. f) The fiber was washed out of components, using mixtures of isopropanol-water and dried again for 24 hours. Figures 7, 8 and 9 show micrographs obtained by the scanning electron microscopy (SEM) of microfibers varying its composition. Parts A and B of Figures 7, 8 and 9 (upper part) always show the fracture of the obtained fiber to illustrate the homogeneity obtained after the spinning process; e.g. Figure 7(A) shows the cross-sectional view of the fiber (fracture) before cross-linking, (B) after crosslinking. At the bottom, the longitudinal view of the fiber's surface before (C) and after cross-linking is shown (D). The microfibers were prepared by using a composition of about 12, 14 and 15 % by weight. The average diameter of the filaments was determined for each spinning rate with scanning electronic microscope from at least four different measurements conducted in various locations over the length of the same fiber. It was found out that the composition has influenced the diameter of the fibers. Figure 7(C) shows that the diameter of the microfiber obtained from 12% by weight presented an average diameter of 147.3µm before cross-linking and 128 µm after crosslinking (D). Figure 8(C) demonstrated that the fiber obtained from 14% by weight, exhibited a diameter of 223.4 µm before cross-linking and after crosslinking the diameter had again decreased to 151.6 µm (Figure 8(D). Figure 9(C) shows that microfiber obtained by using 15% by weight had decreased diameter from 217.1 to 153.2 µm. However, this composition reveals a constant swelling ratio after 300s (Figure 10). Fibers are able to swell in contact with water and physiological medium without dissolving. Optical microscopy was used to determine the increase of the diameter of the material after contact with PBS. Figure 10 shows the swelling degree of the fibers prepared in Examples 16-18. Moreover, the biocompatibility of the microfibers was characterized before and after cross-linking. Microfibers were sterilized and placed in a 12-well plate at a concentration of 1.8 and 3.6µ/ml, to test the compatibility by a direct contact of the cells with the fibers. The test was performed before and after the crosslinking reaction by triplicate. Figure 11 demonstrates that the microfibers are cytocompatible after testing with NIH-3T3 fibroblasts. Furthermore, the microfibers were free of palladium after washing, which makes them suitable for uses in vivo. Figure 12 show the tensile strength of the composition that reported the highest tension strength (15% by weight). The tension was determined in a Universal tensile stress machine (Instron). The tension strength was obtained before and after cross-linking. In other words, the tensile strength is a measure of the stress that is required for stretching the fiber until the fiber breaks. First the fiber is extended by applying the force (load) of 0,05 N using an initial rate of 1 mm/ min and then it is subjected to the tensile stress at a rate of 10 mm/min until it breaks. For each type of sample, minimally four tests were conducted and the data were analyzed statistically. From the experimental data, it was found out that the best composition was obtained by a physical mixture of components in 15% by weight. The value of the tension strength of these fibers was determined and is shown in Tables 1 and 2. The measurement was done before cross-linking and after cross-linking. As it is shown in Table 1, the fiber presented a value of tensile strength of 51.05 ± 3.5 MPa, whereas the same composition after cross-linking presented more than two fold tensile strength, in this case 114.63±4.23 MPa (Table 2).

### EXAMPLES

These examples are merely for illustrative proposes only and are not mean to be limiting the scope of the claims. All parts, percentages, ratios, etc in the examples are by weight, unless noted otherwise.

### Example 1. Preparation of component containing iodine as the terminal group (Ia)

10 g of hyaluronan with a mean molecular weight of 498 kDa, which corresponds to 0.025 mmol of monomeric unit of HA were solubilized in 1000 mL of distilled water at room temperature. 2.57 g of NaBr and 38.84 g of Na₂HPO_{4.}12 H₂O were added to the mixture. The pH of the reaction was adjusted to 9.0 by addition of NaOH 0.1M. The reaction was cooled to 5°C and evacuated and refilled with nitrogen. 53.3 mg of 4-acetamido-TEMPO were added, followed by the addition of 3mL of sodium hypochlorite. The oxidation reaction was carried out for 15 minutes. The pH of the reaction mixture was adjusted to 7.0 by addition of acetic acid. Then, 1.159 g of *p*-iodo-aniline, were added to the mixture. The reaction was left for 5 h at room temperature. Finally, 0.566 g of picoline borane was added to the reaction and the reaction was stirred overnight. The solution was diluted with 1000 ml of water and ultrafiltrated using a centramate cassette (Paal Co) with a molecular cut-off of 10kDa. The product was precipitated with IPA and washed three times with IPA: water (100:0, 80:20, and 60:40) and dried in the oven at 60°C. The reaction product was fully characterized by analytical methodologies. Yield of the reaction: 90%. Molecular weight measured by SEC-MALLS reported a value of 556 kDa and polydispersity 1.59. Degree of substitution (DS) =6% NMR ¹H (500 MHz, NaOD, δ ppm): 2.02 (s, 3H,-NH-CO-CH₃), 3.35-3.84 (m, 14H), 4.46 (d, 2H), 6.68 (d, 2H, J=8.35), 7.56 (d, 2H, J=8.35). 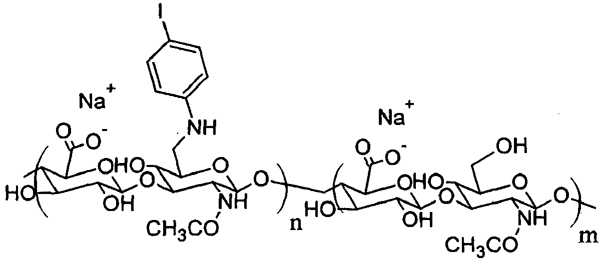 DS= (n+m) =100%; n=4-8%

### Example 2. Preparation of component containing bromine as the terminal group (Ib)

10 g of hyaluronan with a mean molecular weight of 498 kDa (0.025 mmol) were solubilized in 1000 mL of distilled water at room temperature. 2.57 g of NaBr and 38.84 g of Na₂HPO_{4.}12 H₂O were added to the mixture. The pH of the reaction was adjusted to 9.0 by addition of NaOH 0.1M. The reaction was cooled to 5°C and evacuated and refilled with nitrogen. 53.3 mg of 4-acetamido-TEMPO were added, followed by the addition of 3mL of sodium hypochlorite. The oxidation reaction was carried out for 15 minutes. The pH of the reaction mixture was adjusted to 7.0 by addition of acetic acid. After that 0.910 g of *p*-bromoaniline (0.2 equivalents) were added to the reaction. The reaction was carried out by 5 h at room temperature. Finally, 0.566 g of picoline borane (0.2 equivalents) was added to the mixture. The reaction was stirred overnight at room temperature. After that the solution was diluted with 1000 ml of water and ultrafiltrated using a centramate cassette with a molecular cut-off of 10kDa. The product was precipitated with IPA and washed three times with IPA: water (100:0, 80:20, 60:40). The precipitate is dried in the oven at 60°C. Then, the reaction product was fully characterized by analytical methodologies. Yield of the reaction 10.5 g. The molecular weight measured by SEC-MALLS has a mean value of 853 kDa and polydispersity 2.01. Degree of substitution (DS) =6%.
NMR ¹H (500 MHz, NaOD, δ ppm): 2.02 (s, 3H,-NH-CO-CH₃), 3.35-3.84 (m, 14H), 4.46 (d, 2H), 6. 80 (d, 2H, J=8.35), 7.39 (d, 2H, J=8.35).

### Example 3. Preparation of component containing borate as terminal group (Ic)

1.0 g of oxidized hyaluronan with the mean molecular weight of 251.2 kDa was dissolved in 100 ml of phosphates buffer pH 8. To that solution 0.086 g of aminophenylboronic acid hydrochloride were added. The reaction was stirred at room temperature for 5 hours. 0.084 g of picoline borane was added (0.03 equivalents to HA-dimer). The reaction was stirred overnight. The reaction product was purified by extensive dialysis against a solution 0.5 %(w/v) of NaHCO₃ /NaCl and after that extensively against water. The yield of the reaction was 1.04 g. The molecular weight of the product was 121.8 kDa and polydispersity of 1.46. The degree of substitution determined by NMR is 8%. NMR ¹H (500 MHz, NaOD, δ ppm): 2,0 (s, 3H), 2,85 (m, 2H), 3,1 (m, 2H), 3,4-4,0 (m, 10H), 4,5 (d, 2H), 7.34 (m, 5H)

### Example 4. Preparation of component containing a triple bond (propargyl) IIa

10.0 g of oxidized hyaluronan with a mean molecular weight of 798 kDa were dissolved in 960 ml of water. Propargyl amine hydrochloride (0.3 equivalents to HA dimer) were added to the reaction mixture. The pH of the reaction was adjusted by adding 1 mL of acetic acid till the mixture reaches pH 5.5. After 5 hours of stirring at room temperature, 0-424 g of picoline borane was added (corresponding to 0.3 eq. of hyaluronic acid repeating dimers. The reaction proceeded overnight. The product was purified by ultrafiltration. The propargyl-modified HA product was fully characterized by common analytical techniques. The signals used for the quantitative evaluation of propargyl amine moieties bound to HA are the methyl assigned to HA in comparison to the methylene assigned to the modified polysaccharide. The molecular weight measured by SEC-MALLS has a mean value of 604.4 kDa and polydispersity 2.15. The degree of substitution (DS) = 12% FT-IR (KBr, cm-1): 3379 (υ, -O-H), 2894, 2131 (υ, C≡C), 1614, 1407, 1078, 613. NMR ¹H (500 MHz, NaOD, δ ppm): 2,0 (s, 3H), 2,85 (m, 2H), 3,1 (m, 2H), 3,4-4,0 (m, 10H), 4,5 (d, 2H). 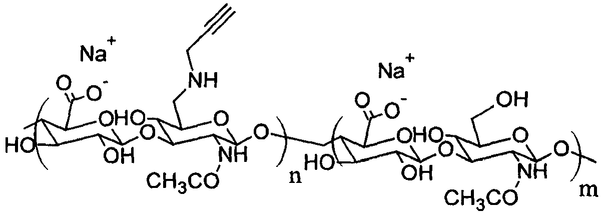 DS=n=8-15%

### Example 5. Preparation of component containing a triple bond (butynyl) IIb

In general, 10.0 g of sodium hyaluronate with a mean molecular weight of 130kDa was dissolved in 960 ml of water. To that solution 2.57g of sodium bromide was added (2,5mmol). 38.8 g of sodium phosphate was added to the reaction mixture in order to reach pH=9.0. The following reactants were added in sequence: 53.3 mg of 4-acetamido-TEMPO previously dissolved in water (1ml) and subsequently 3.0 ml of sodium hypochlorite. The mixture was left under stirring for 5 hours. The reaction was allowed to reach room temperature. In this moment, the pH was adjusted potentiometrically with addition of acetic acid to reach pH= 5.5. To this mixture n-butynyl-amine (0.3 mmol) was added. The reductive amination was carried out for 5 hours. After that, 0.424 g of picoline borane was added (corresponding to 0.3 eq. of hyaluronic acid repeating dimers). The reaction was allowed to proceed at room temperature overnight. The product was purified by ultrafiltration. The propargyl-modified HA product was fully characterized by common analytical techniques. The signals used for the quantitative evaluation of propargyl amine moieties bound to HA are the methyl assigned to HA in comparison to the methylene assigned to the modified polysaccharide. The molecular weight measured by SEC-MALLS has a mean value of 440.1 kDa and polydispersity 1.57. Degree of substitution (DS)= 12% NMR ¹H (500 MHz, δ ppm): 2.03 (3H, -N-CO-*CH₃*), 2.64 (2H, t J=6.6, -NH-CH₂-*CH₂*-), 2.70 (1H, t; J=6.6), 3.18 (2H t; J=6.5, -NH-*CH₂*-CH₂-), 3.30-3.90(10H, sceletal), 4,46 (2H, 1a,1b). FT-IR (KBr, cm-1): 3379 (υ , -O-H), 2894, 2131 (υ ,C≡C), 1614, 1407, 1078, 613.

### Example 6. Preparation of component containing a double bond (allyl) III

In general, 1.0 g of oxidized sodium hyaluronate with a mean molecular weight of 130kDa and polydispersity of 1.9 (2.5 mmol) was dissolved in 100 ml of water. Allyl amine, (0.285 g, 0.5 mmol) was added to the previous solution. The reaction was stirred for 5 hours at room temperature. Then, 0.0535 g of picoline borane was added (0.5 mmol). The reaction proceeded at room temperature overnight. The reaction was purified by dialysis using a tube with 10kDa cut-off. The yield of the reaction was 0.6932 g. SEC MALLS data revealed a molecular weight of 203.05 kDa and polydispersity of 1.574. Integration of the acetamido moiety reveals a degree of substitution -determined by the comparison with the alkenyl signal- of 8%.

### Example 7. Crosslinking reaction carried out by using TEMED and palladium active catalyst at 25°C

Preparation of Pd-pyrimidine "active catalyst" is described herein: To a 10 mL volumetric flask 2-amino-4, 6-dihydroxypyrimidine (13 mg, 0.10 mmol) and 2 mL of a 0.10 M NaOH stock solution were added. The pyrimidine ligand was dissolved completely by stirring for 2 minutes in a water bath preheated to 65 °C. To the resulting solution Pd (OAc)₂ (22.4 mg, 0.1 mmol) was added. The mixture was stirred vigorously at 65 °C for 30 minutes (open air) to give a homogenous yellow-orange solution. After cooling to room temperature, the stir bar was removed and the solution was diluted to 5.00 mL with distilled water to give a catalyst solution 0.01 M in Pd (II). A general procedure for crosslinking reaction is described here: 10 mg of component **Ia** (0.025 mmol) and 10 mg of component **IIa** (0.025 mmol) were dissolved in 2 ml of distilled water. To that solution, consecutively 10 µl (0.0006 mmol) of TEMED (Tetramethylethylenediamine (TMEDA or TEMED), and 10 µl of solution of palladium active catalyst were added. Vortexing was used after the addition of catalyst to ensure a good homogenization. The reaction was filled with nitrogen and carried for 6h at 25°C. The prepared hydrogel was extensively washed with PBS (3x100ml) and distilled water (3x100ml) in order to remove the catalyst. The remaining palladium was quantified as 215±25 ng/g of dry mass.

### Example 8. Crosslinking by using TEMED and palladium (II) acetate at 25 and 60°C

20 mg of component Ia (0.5 mmol) and 20 mg of component IIa (0.5mmol) were dissolved in 1 ml of distilled water. To that solution consecutively 10 µl (0.0006 mmol) of TEMED (Tetramethylethylenediamine), and 3 mg of palladium (II acetate (0.013 mmol) were added. Vortexing was used after the addition of catalyst to ensure a good homogenization. The reaction was filled with nitrogen and warmed up for 6 hours at 60 °C. The hydrogel was extensively washed with PBS (3x100ml) and distilled water (3x100ml) in order to remove the catalyst. The structure of the dried material was studied by SEM after drying (Figure 3). The course of the cross-linking reaction was followed by rheology. Rheological measurements were performed on a TA rheometer with cone and plate geometry at room temperature. The measurement parameters were τ = 10000 Pa and f =1 s⁻¹. Solutions of the components Ia and IIa were prepared at concentrations of 2 % (w/v). Thus, 2 mg of palladium (II) acetate were incorporated by vortexing to the polymeric mixture, followed by 10 µl of TEMED. After a good homogenization of the mixture, the prepared solution (500 µl) was transferred to the cylindrical cell of the rheometer kept at constant temperature 25 or 60°C, respectively (Figures 4A and 4B).

### Example 9. Crosslinking by using CsCO₃ and palladium active catalyst at 60°C

20 mg of component Ia (0.5 mmol) and 20 mg of component IIa (0.5mmol) were dissolved in 1 ml of distilled water. To that solution, consecutively 10 mg (0.028 mmol) of cesium carbonate and 10µl of solution (0.01M) of palladium active catalyst prepared as described in example 6 were added. Vortexing was used to ensure a good homogenization. The reaction was filled with nitrogen and stirred for 24h at 60°C. The hydrogel was extensively washed with PBS and distilled water in order to remove the catalyst.

### Example 10. Crosslinking by using palladium (II) acetate and DABCO at 37°C

20 mg of component Ia (0.5 mmol) and 20 mg of component IIa (0.5mmol) were dissolved in 1 ml of distilled water. To that solution, consecutively 10 mg (0.09 mmol) of DABCO (or 1, 4-diazabicyclo [2.2.2] octane) and 1 mg (0.004 mmol) of palladium (II) acetate previously dissolved in water were added. Vortexing was used after the addition of the catalyst to ensure a good homogenization. The reaction was filled with nitrogen and stirred for 24h at 37°C. The prepared hydrogel was extensively washed with PBS and distilled water in order to remove the catalyst. The structure of the hydrogel is depicted in Figure 6.

### Example 11. Crosslinking by using palladium (II) acetate and TEA at 37°C

20 mg of component Ia (0.5 mmol) and 20 mg of component IIa (0.5mmol) were dissolved in 1 ml of distilled water. To that solution, 10 µl (0.010 mmol) of TEA and 10µl of a solution of palladium (II) acetate (3%w/v) in water were added consecutively. Vortexing was used after the addition of each component to ensure a good homogenization. The reaction was filled with nitrogen and stirred for 24h at 37°C. The prepared hydrogel was extensively washed with PBS and distilled water in order to remove the catalyst.

### Example 12. Crosslinking by using palladium (II) acetate and K₂HPO₄ at 60°C

20 mg of component Ib (0.5 mmol) and 20 mg of component IIb (0.5mmol) were dissolved in 1 ml of distilled water. To that solution, 10 mg (0.057 mmol) of K₂HPO₄ and 10µl of a solution of palladium (II) acetate (3%w/v) in water were added consecutively. Vortexing was used after the addition of catalyst to ensure a good homogenization. The reaction was filled with nitrogen and stirred for 24h at 60°C. The prepared hydrogel was extensively washed with PBS and distilled water in order to remove the catalyst. The structural characterization by SEM micrograph is shown in Figure 5.

### Example 13. Crosslinking by using palladium active catalyst and K₂HPO₄ at 60°C

20 mg of component Ib (0.5 mmol) and 20 mg of component IIc (0.5mmol) were dissolved in 1 ml of distilled water. To that solution, 10 mg (0.057 mmol) of K₂HPO₄ and 10µl of a solution of palladium active catalyst (0.01M) prepared as described in example 6 were added consecutively. Vortexing was used after the addition of each component to ensure a good homogenization. The reaction was carried out for 5 hours at 60°C.

### Example 14. Crosslinking by using palladium (II) acetate in phosphates buffer (pH 6.0)

20 mg of component Ia (0.5 mmol) and 20 mg of component IIa (0.5mmol) were dissolved in 2 ml of phosphates buffer pH; 6.0, pH. To that solution 10 mg (0.028 mmol) of TEMED and 10mg (0.04 mmol) of palladium (II) acetate were added consecutively. Vortexing was used after the addition of catalyst and base to ensure a good homogenization. The reaction was filled with nitrogen and stirred for 24h at 60°C. The prepared hydrogel was extensively washed with PBS and distilled water in order to remove the catalyst.

### Example 15. Crosslinking by using palladium (II) acetate in phosphates buffer (pH 6.0)

20 mg of component Ib (0.5 mmol) and 20 mg of component IIa (0.5mmol) were dissolved in 2 ml of phosphates buffer pH; 8.0, To that solution, 10 mg (0.028 mmol) of TEMED and 10mg (0.04 mmol) of palladium (II) acetate were added consecutively. Vortexing was used after the addition of the catalyst and base to ensure a good homogenization. The reaction was filled with nitrogen and stirred for 24h at 60°C. The prepared hydrogel was extensively washed with PBS and distilled water in order to remove the catalyst.

### Example 16. Crosslinking of microfibers using 12% (w/v) of concentration of derivatives and palladium active catalyst at 60°C

Formation of microfibers: A physical mixture of derivatives described as **Ib** and **IIa** were dissolved in water to form an aqueous solution of 12% by weight. The mixture was vigorously stirred due to high viscosity of the suspension (minimally for 24h) before the spinning process to achieve the perfect homogeneity. The mixture was transferred into a syringe, which was left open to allow the escape of trapped air. The basic experimental setup used for the formation of fibers includes a syringe containing the polymer solution that is held using a holder. The syringe was placed into a linear syringe pump (Nexus 5000, Chemyx). The syringe was attached to injection tubing, wherein the polymeric mixture is directly injected into the coagulation bath, so that the microfibers were obtained using a wet-spinning process. The experiments are carried out at room temperature with an average extrusion speed of 260 µl/min. The coagulation bath may consist for example of an alcohol, e.g. methanol or ethanol, and an organic acid, e.g. formic or acetic acid, in water. However, the composition of the coagulation bath is not meant to be limiting for the scope of the invention, since the subject of the invention is crosslinking of the formed fibers. There are of course also other methods useful for the production of hyaluronan filaments as described previously in the art. The resulting fiber is forced out of the bath and extended by rolling between two coils. The final fiber is then dehydrated at room temperature. The drying process allows gradually the evaporation of the volatile components, which were used for the precipitation of the microfiber.

**Setting of reaction conditions for cross-linking of the microfibers:** The microfiber was transferred to a bath, hereinafter called cross-linking bath containing a mixture of isopropanol and lactic acid in ratio (8:2). However, the composition of the cross-linking bath can vary and may include other alcohols and organic acids without affecting the cross-linking reaction. Varying the amount of the solution of "palladium active catalyst" from 50 to 100µl, prepared as described previously in example 7, the microfibers were allowed to react into the cross-linked bath. The final concentration of palladium active catalyst used in the cross-linking bath could vary e.g. from 5x10⁻⁵ to 1x10⁻⁴ M. The cross-linking reaction was tried at three different temperatures: at room temperature, 37°C and 60°C. Experimentally, it was observed that the fiber underwent crosslinking at a temperature of 60°C. To monitor the cross-linking time, a piece of fiber was extracted from the reaction and the solubility of the fiber in water was tested. Therefore, the reaction was allowed to proceed for 2 hours, which was found to be the best time. After that, the microfiber was extensively washed with mixtures of isopropanol: water and dried again. The characterization of the microfiber was done by scanning Electron Microscopy (SEM): The microfiber scaffolds are spun on top of the aluminum substrate, sputter-coated with gold and their surface morphology is examined by a Scanning Electron Microscope. The morphological and structural characterizations of the microfibers before and after cross-linking were obtained by SEM and are shown in Figure 7. Tensile tests were measured with a tensile testing machine Instron 3343 and analyzed using Bluehill 2 software.

### Example 17. Crosslinking of microfibers using 14% (w/v) of concentration of derivatives and palladium active catalyst at 60°C

The fibers were prepared using a procedure similar to the one described in example 16, only increasing the concentration of the components to 14% by weight. The fibers were obtained by wet-spinning process using an extrusion speed of 280 µl/min.

### Example 18. Crosslinking of microfibers using 15% (w/v) of concentration of derivatives and palladium active catalyst at 60°C

The fibers were prepared using a procedure similar to the one described in example 16, only increasing the concentration of the components to 15% by weight. The fibers were obtained by wet-spinning process using an extrusion speed of 300 µl/min.

Table 1 below represents mechanical properties of the microfibers as described in Example 18 (before cross-linking). Table 2 represents mechanical properties of the microfibers described in Example 18 (after cross-linking).

**Table 1.**

| Specimen label | Load at Break (Cursor) | Tensile strain at Break (Cursor) | Tenacity at Break (Cursor) | Modulus (Tangent 0.5 %) | Tensile stress at Break (Cursor) |
|---|---|---|---|---|---|
| | (N) | (mm/mm) | (cN/tex) | (MPa) | (MPa) |
| 1 | 2,70 | 0.19 | 2.70383 | > 1334.425 | 55.08204 |
| 2 | 2,36 | 0.15 | 2.36366 | > 1462.406 | 48.15201 |
| 3 | 2,58 | 0.17 | 2.58496 | > 1538.254 | 52.66032 |
| 4 | 2,59 | 0.17 | 2.58656 | > 1429.957 | 52.69302 |
| 5 | 2,29 | 0.14 | 2.29136 | > 1480.453 | 46.67916 |
| Mean | 2,51 | 0.17 | 2.50607 | 1449.099 | 51.05331 |
| Standard Deviation | 0.17190 | 0.01776 | 0.17190 | 75.209 | 3.50188 |
| Median | 2,58 | 0.17 | 2.58496 | 1462.406 | 52.66032 |
| Coefficient of Variation | 6.85926 | 10.74236 | 6.85926 | 5.190 | 6.85925 |

**Table 2.**

| Specimen label | Load at Break (Cursor) | Tensile strain at Break (Cursor) | Tenacity at Break (Cursor) | Modulus (Tangent 0.5 %) | Tensile stress at Break (Cursor) |
|---|---|---|---|---|---|
| | (N) | (mm/mm) | (cN/tex) | (MPa) | (MPa) |
| 1 | 2,39 | 0.10 | 2.39025 | > 4872.143 | 118.88104 |
| 2 | 2,33 | 0.11 | 2.33154 | > 4722.472 | 115.96108 |
| 3 | 2,19 | 0.09 | 2.18782 | > 4720.472 | 108.81340 |
| 4 | 2,31 | 0.09 | 2.30931 | > 4516.462 | 114.85558 |
| Mean | 2,30 | 0.10 | 2.30473 | 4707.887 | 114.62778 |
| Standard Deviation | 0.08509 | 0.00775 | 0.08509 | 146.053 | 4.23190 |
| Median | 2,32 | 0.10 | 2.32042 | 4721.472 | 115.40833 |
| Coefficient of Variation | 3.69186 | 7.81418 | 3.69186 | 3.102 | 3.69186 |

### Example 19. Measurement of the viability of cells before and after crosslinking reaction

Fibers prepared as described in Example 16 were sterilized in autoclave (120°C/20 minutes) and subsequently transferred to the culture medium consisting of Dulbecco's Modified Eagle Medium with 10% fetal bovine serum, 5 g/l D-glucose, 20uM L-glutamine, 100U/ml penicillin and 100µg/ml streptomycin. A solution of fibers was prepared at a concentration of 3.6 mg of sample per mL of culture media. The fibers were suspended overnight. This suspension was tested using two different concentrations: 1.8 and 3.6mg/ml. Cell lines and viability were tested for the cell line NIH-3T3. Cells were seeded in 12-well culture plate and cultivated for 24h before using a density of 3000c per well. After the previous incubation, cells were transferred in the culture medium to have a direct contact with the fiber and dissolved products. Incubation took place for 24, 48 and 72h respectively. After each incubation period, a test MTT (using 3-(4,5-dimethylthiazol-2-yl)-2,5-diphenyl tetrazolium bromide) was used for investigating the cell viability. The test was prepared as indicated; MTT was dissolved at a concentration of 5mg/ml in culture medium. 20µl of the MTT solution was transferred to the well and was incubated for 2.5 h. The measurement of the absorbance microplate was read using a VersaMax at two different absorbance values, in this case 570 and 690 nm. The graphical evidence of the biocompatibility is shown in Figure 11.

### References

Collins, M. N., & Birkinshaw, C. (2007). Comparison of the effectiveness of four different crosslinking agents with hyaluronic acid hydrogel films for tissue-culture applications. Journal of Applied Polymer Science, 104(5), 3183-3191.
Matarasso, S. L., & Herwick, R. (2006). Hypersensitivity reaction to nonanimal stabilized hyaluronic acid. Journal of the American Academy of Dermatology, 55(1), 128-131.
Murty, K. V. S. N., & Vasella, A. (2001). Oligosaccharide Analogues of Polysaccharides, Part□21 , Towards New Cellulose I Mimics: Synthesis of Dialkynyl C-glucosides of peri-Substituted Anthraquinone. Helvetica Chimica Acta, 84(4), 939-963.
Roy, R., Das, S. K., Santoyo-González, F., Hernández-Mateo, F., Dam, T. K., & Brewer, C.
F. (2000). Synthesis of "Sugar-Rods" with Phytohemagglutinin Cross-Linking Properties by Using the Palladium-Catalyzed Sonogashira Reaction. Chemistry -A European Journal, 6(10), 1757-1762.
Schanté, C. E., Zuber, G., Herlin, C., & Vandamme, T. F. Chemical modifications of hyaluronic acid for the synthesis of derivatives for a broad range of biomedical applications. Carbohydrate Polymers, 85(3), 469-489.
Yeom, J., Bhang, S. H:, Kim, B.-S., Seo, M. S., Hwang, E. J., Cho, I. H., Park, J. K., & Hahn, S. K. Effect of Cross-Linking Reagents for Hyaluronic Acid Hydrogel Dermal Fillers on Tissue Augmentation and Regeneration. Bioconjugate Chemistry, 21(2), 240-247.

## Claims

1. A process of preparation of a crosslinked hyaluronan derivative, **characterized in that** it is carried out by a C-C coupling reaction in water, phosphates buffer or a mixture of an organic acid and an alcohol, and in the presence of a palladium active catalyst, wherein the C-C coupling reaction takes place between a hyaluronan derivative carrying a terminal aryl-halide and/or aryl-borate group, and a hyaluronan derivative carrying an alkenyl or alkynyl group.

2. The process according to claim 1, **characterized in that** first a secondary amine hyaluronan derivative carrying a terminal aryl substitute, according to the formula (I), is prepared: 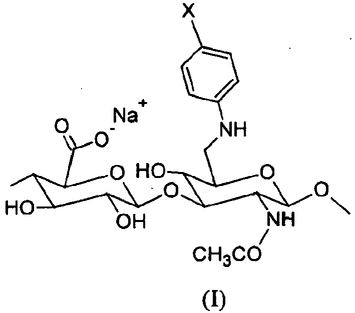 wherein X= halogen or a borate functional group,
then a secondary amine hyaluronan derivative carrying an unsaturated compound that contains a triple or a double bond, according to the formula (II) or (III), is prepared: 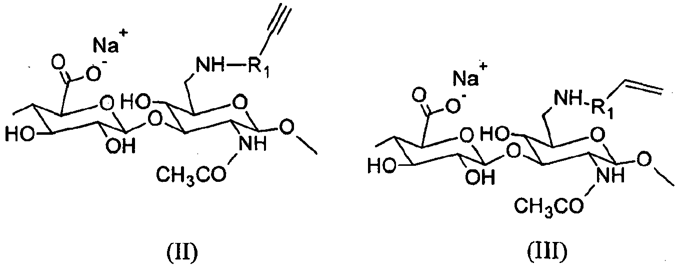 wherein R₁ is an aliphatic C₁₋₁₅ group,
and then the derivative of the formula (I) is mixed with the derivative of the formula (II) or (III), then a palladium active catalyst stable in water is added in order to obtain the crosslinked hyaluronan derivative.

3. The process according to claim 2, **characterized in that** X is I, Br or B-(OH)₃, and R₁ is methylene or ethylene.

4. The process according to any of the preceding claims, **characterized in that** the palladium active catalyst is selected from the group comprising a complex of palladium (II) acetate and an inorganic or organic base, and a complex of palladium (II) and 2-amino-4,6-dihydroxypyrimidine, while the concentration of the palladium active catalyst in the reaction mixture is within the range from 1x10⁻⁵ to 1x10⁻³ M.

5. The process according to claim 4, **characterized in that** the palladium active catalyst is a complex of palladium (II) acetate and an inorganic or organic base, the concentration of the palladium active catalyst in the reaction mixture is within the range from 1x10⁻⁴ to 1x10⁻³ M, preferably 5x10⁻⁴, while the resulting crosslinked hyaluronan derivative is in the form of a hydrogel.

6. The process according to claim 5, **characterized in that** the base is selected from the group comprising DABCO, TEMED, TEA, secondary phosphates, such as K₂HPO₄, carbonates, such as CsCO₃.

7. The process according to claim 5, **characterized in that** the base is TEMED or DABCO.

8. The process according to claim 4, **characterized in that** the derivative of the formula (I) is mixed with the derivative of the formula (II) or (III) and the mixture is extruded into a coagulation bath in order to obtain hyaluronan derivative microfibers, and then the microfibers are transferred to the crosslinking bath containing a palladium active catalyst in order to obtain crosslinked hyaluronan-derivative microfibers.

9. The process according to claim 8, **characterized in that** the palladium active catalyst is a complex of palladium (II) and 2-amino-4,6-dihydroxypyrimidine and the concentration of the palladium active catalyst in the crosslinking bath is within the range from 1x10⁻⁵ to 1x10⁻⁴ M, preferably 5x10⁻⁵.

10. The process according to claim 8 or 9, **characterized in that** the coagulation bath consists of a mixture of an alcohol and an organic acid and the crosslinking bath consists of a mixture of an alcohol and lactic acid and the palladium active catalyst.

11. The process according to claim 10, **characterized in that** the alcohol in the crosslinking bath is selected from methanol, ethanol and isopropanol.

12. The process according to any of the preceding claims, **characterized in that** the crosslinking is carried out at temperatures of between 25 and 100° C, preferably 60°C.

13. A hydrogel according to the formula A or B 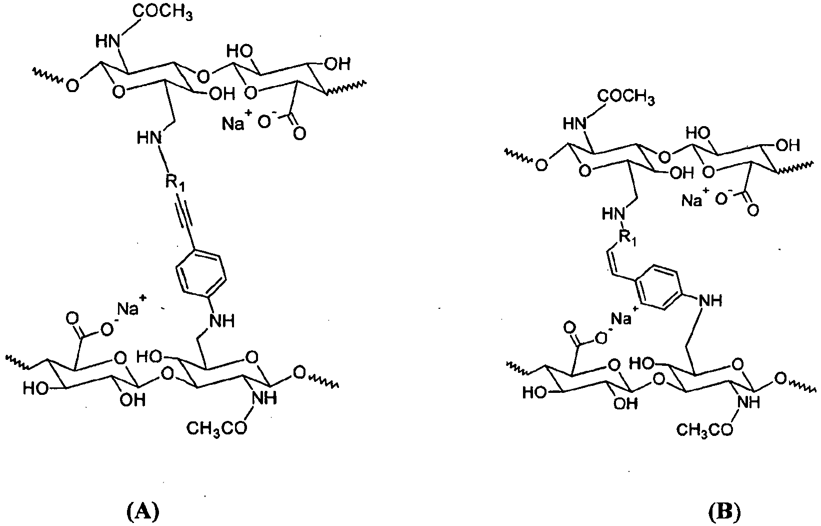 wherein R₁ is an aliphatic C₁₋₁₅ substituent.

14. The hydrogel according to claim 13, **characterized in that** R₁ is methylene or ethylene.

15. A microfiber based on a hyaluronan derivative according to the formula A or B 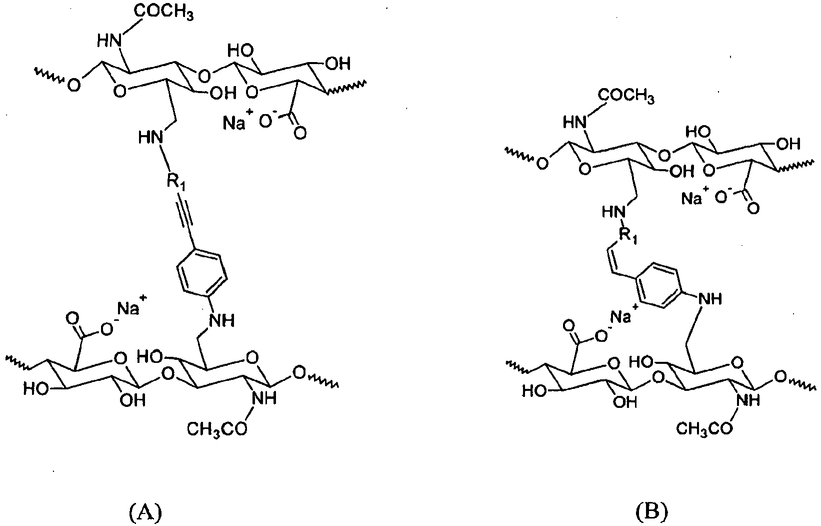 wherein R₁ is an aliphatic C₁₋₁₅ substituent.

16. The microfiber according to claim 15, **characterized in that** it has the diameter of 100 to 300 µm.

## Patentansprüche

1. Verfahren zur Vorbereitung eines vernetzten Derivats der Hyaluronsäure, **dadurch gekennzeichnet, dass** es mittels einer im Wasser, einem Phosphatpuffer oder einem sich aus einer organischen Säure und einem Alkohol zusammensetzenden Gemisch stattfindenden C-C-Bindungsreaktion sowie in Anwesenheit von einem aktiven Palladiumkatalysator durchgeführt wird, wobei die C-C-Bindungsreaktion zwischen einem Derivat von Hyaluronan, der eine terminale Aryl-Halid-Gruppe und/oder eine Aryl-Borat-Gruppe trägt, und einem Derivat von Hyaluronan, der eine Alkenyl- oder Alkynylgruppe trägt, verläuft.

2. Verfahren nach Anspruch 1, **dadurch gekennzeichnet, dass** zunächst ein sekundäres Amin Derivat von Hyaluronan, der einen terminale Aryl-Gruppe-Substituent trägt, nach der Formel (I) vorbereitet wird: 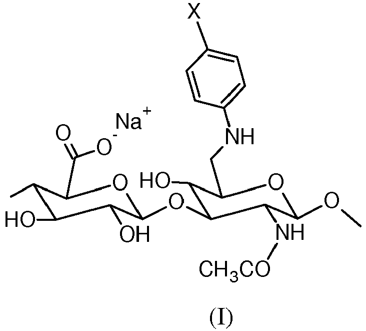 wobei X = eine Halogene oder Borate enthaltende Funktionsgruppe ist,
dann ein sekundäres Amin Derivat von Hyaluronan, der eine ungesättigte, Doppel- oder Dreifachbindungen aufweisende Verbindung enthält, nach der Formel (II) oder (III) vorbereitet wird: 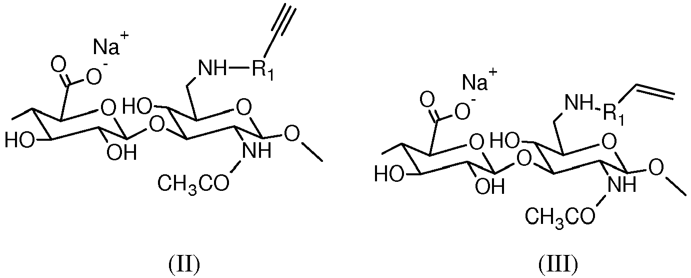 wobei R₁ eine aliphatische C₁₋₁₅-Gruppe ist,
und anschließend das Derivat nach der Formel (I) mit dem Derivat nach der Formel (II) oder (III) vermischt wird und dem derart erhaltenen Gemisch ein wasserstabiler aktiver Palladiumkatalysator zugegeben wird, um das vernetzte Derivat von Hyaluronan zu erhalten.

3. Verfahren nach Anspruch 2, **dadurch gekennzeichnet, dass** X eine der Substanzen I, Br oder B-(OH)₃ ist und R₁ entweder Methylen oder Ethylen ist.

4. Verfahren nach einem der vorhergehenden Ansprüche, **dadurch gekennzeichnet, dass** der aktive Palladiumkatalysator aus der Gruppe ausgewählt wird, die einen aus Palladium (II)-Acetat und eine anorganische oder organische Basis bestehenden Komplex und einen aus Palladium(II) und 2-Amino-4,6-Dihydroxypyrimidin bestehenden Komplex umfasst, wobei die Konzentration des aktiven Palladiumkatalysators in dem Reaktionsgemisch im Bereich von 1x10⁻⁵ bis 1x10⁻³ M liegt.

5. Verfahren nach Anspruch 4, **dadurch gekennzeichnet, dass** der aktive Palladiumkatalysator ein aus Palladium (II)-Acetat und einer anorganischen oder organischen Basis bestehender Komplex ist, wobei die Konzentration des aktiven Palladiumkatalysators in dem Reaktionsgemisch im Bereich von 1x10⁻⁴ bis 1x10⁻³ M liegt und vorzugsweise 5x10⁻⁴ beträgt, und dass das resultierende vernetzte Derivat von Hyaluronan in der Form eines Hydrogels vorliegt.

6. Verfahren nach Anspruch 5, **dadurch gekennzeichnet, dass** die Basis aus der Gruppe ausgewählt wird, die DABCO, TEMED, TEA, sekundäre Phosphate, wie beispielsweise K₂HPO₄, sowie Karbonate, wie beispielsweise CsCO₃, umfasst.

7. Verfahren nach Anspruch 5, **dadurch gekennzeichnet, dass** die Basis TEMED oder DABCO ist.

8. Verfahren nach Anspruch 4, **dadurch gekennzeichnet, dass** das Derivat nach der Formel (I) mit dem Derivat nach der Formel (II) oder (III) vermischt wird und das derart entstandene Gemisch in ein Koagulierbad extrudiert wird, um Mikrofasern vom Derivat von Hyaluronan zu erhalten, die anschließend in das Vernetzungsbad, das den aktiven Palladiumkatalysator enthält, übertragen werden, um vernetzte Mikrofasern vom Derivat von Hyaluronan zu erhalten.

9. Verfahren nach Anspruch 8, **dadurch gekennzeichnet, dass** der aktive Palladiumkatalysator ein Komplex von Palladium(II) und 2-Amino-4,6-Dihydroxypyrimidin ist, wobei die Konzentration des aktiven Palladiumkatalysators in dem Vernetzungsbad im Bereich von 1x10⁻⁵ bis 1x10⁻⁴ M liegt und vorzugsweise 5x10⁻⁵ beträgt.

10. Verfahren nach Anspruch 8 oder 9, **dadurch gekennzeichnet, dass** das Koagulierbad aus einem Gemisch eines Alkohols und einer organischen Säure besteht, während das Vernetzungsbad aus einem Gemisch eines Alkohols, der Milchsäure und des aktiven Palladiumkatalysators besteht.

11. Verfahren nach Anspruch 10, **dadurch gekennzeichnet, dass** der in dem Vernetzungsbad enthaltene Alkohol aus der Gruppe ausgewählt wird, die Methanol, Ethanol und Isopropanol umfasst.

12. Verfahren nach einem der vorhergehenden Ansprüche, **dadurch gekennzeichnet, dass** die Vernetzung bei einer Temperatur im Bereich von 25 bis 100° C, vorzugsweise bei der Temperatur von 60°C, durchgeführt wird.

13. Hydrogel nach der Formel A oder B, 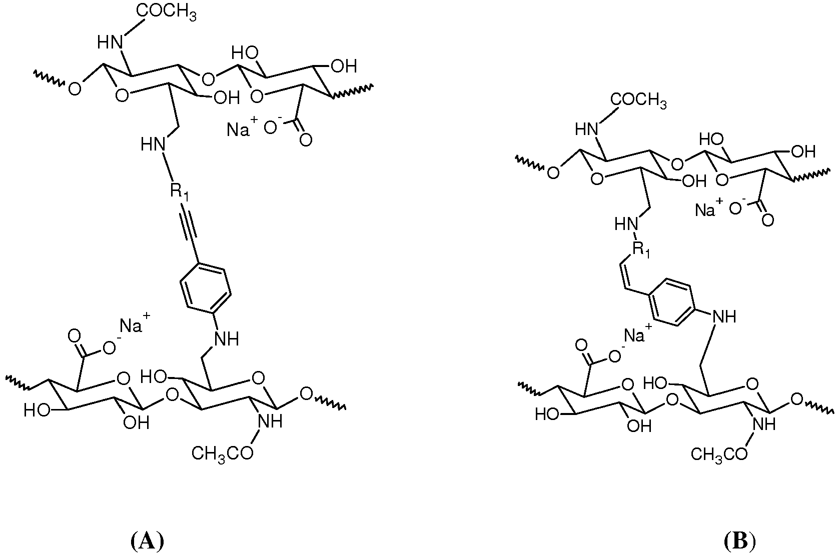 wobei R₁ ein aliphatischer C₁₋₁₅ Substituent ist.

14. Hydrogel nach Anspruch 13, **dadurch gekennzeichnet, dass** R₁ entweder Methylen oder Ethylen ist.

15. Mikrofaser auf der Basis von einem Derivat von Hyaluronan nach der Formel A oder B, 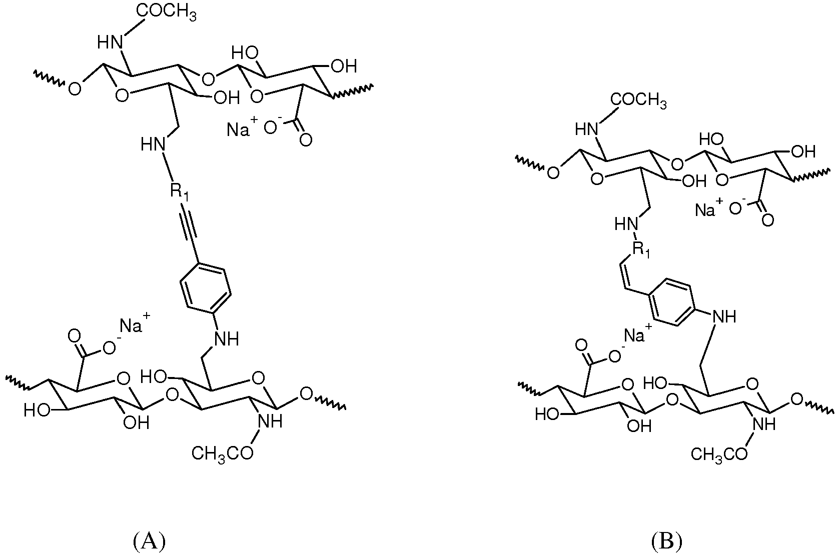 wobei R₁ ein aliphatischer C₁₋₁₅ Substituent ist.

16. Mikrofaser nach Anspruch 15, **dadurch gekennzeichnet, dass** sie ein Durchmesser von 100 bis 300 µm hat.

## Revendications

1. Procédé de préparation d'un dérivé de l'acide hyaluronique réticulé, **caractérisé en ce qu'**elle est réalisée par une réaction de couplage C-C dans l'eau, le tampon phosphate salin ou un mélange d'un acide organique et un alcool, et en présence d'un catalyseur de palladium actif, dans lequel la réaction de couplage C-C a lieu entre un dérivé de hyaluronane portant un halogénure d'aryle terminal et / ou un groupe aryle-borate, et un dérivé de hyaluronane portant un groupe alcényle ou un groupe alkyle.

2. Procédé selon la revendication 1, **caractérisé en ce que** en premier lieu un dérivé de hyaluronane amine secondaire portant un substitut aryle terminal, selon la formule (I), est préparé: 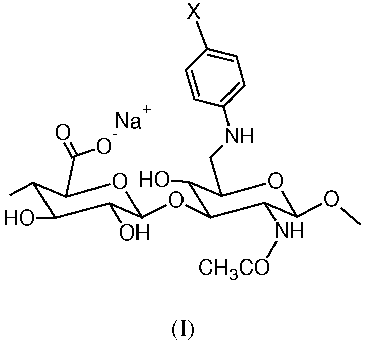 dans laquelle X = halogène ou un groupe fonctionnel de borate,
puis un dérivé de hyaluronane amine secondaire portant un composé insaturé qui contient une triple ou une double liaison, selon la formule (II) ou (III), est préparé : 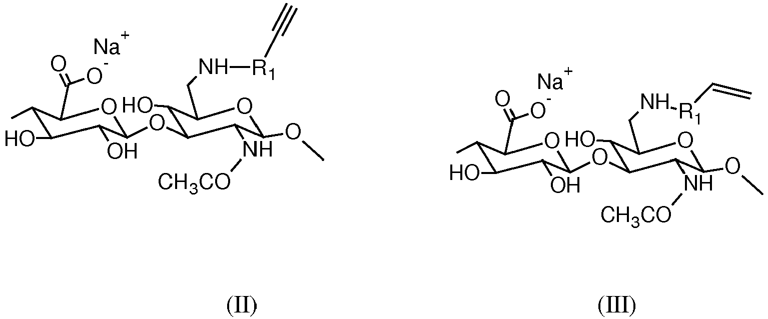 dans laquelle R₁ est un groupe aliphatique en C₁₋₁₅, et ensuite le dérivé de formule (I) est mélangé avec le dérivé de la formule (II) ou (III), puis un catalyseur de palladium actif qui est stable dans l'eau est ajouté pour obtenir le dérivé de hyaluronane réticulé.

3. Procédé selon la revendication 2, **caractérisé en ce que** X représente I, Br ou B- (OH)₃, et R₁ est méthylène ou éthylène.

4. Procédé selon l'une quelconque des revendications précédentes, **caractérisé en ce que** le catalyseur de palladium actif est choisi dans le groupe comprenant un complexe de palladium (II) acétate et une base inorganique ou organique, et un complexe de palladium (II) et de 2-amino-4,6-dihydroxypyrimidine, tandis que la concentration du catalyseur de palladium actif dans le mélange de réaction est dans la plage de 1x10⁻⁵ à 1x10⁻³ M.

5. Procédé selon la revendication 4, **caractérisé en ce que** le catalyseur de palladium actif est un complexe de palladium (II) acétate et d'une base inorganique ou organique, la concentration du catalyseur de palladium actif dans le mélange de réaction est dans la plage de 1x10⁻⁴ à 1x10⁻³ M, de préférence 5x10⁻⁴, tandis que le dérivé réticulé de hyaluronane résultant est sous la forme d'un hydrogel.

6. Procédé selon la revendication 5, **caractérisé en ce que** la base est choisie dans le groupe comprenant DABCO, TEMED, TEA, des phosphates secondaires telles que K₂HPO₄, des carbonates tels que CsCO₃.

7. Procédé selon la revendication 5, **caractérisé en ce que** la base est TEMED ou DABCO.

8. Procédé selon la revendication 4, **caractérisé en ce que** le dérivé selon la formule (I) est mélangé avec le dérivé selon la formule (II) ou (III) et le mélange est extrudé dans un bain de coagulation pour obtenir microfibres de dérivé de hyaluronane, puis les microfibres sont transférées dans le bain de réticulation contenant un catalyseur de palladium actif pour obtenir des microfibres de hyaluronane dérivés réticulés.

9. Procédé selon la revendication 8, **caractérisé en ce que** le catalyseur de palladium actif est un complexe de palladium (II) et de 2-amino-4,6-dihydroxypyrimidine et la concentration du catalyseur de palladium actif dans le bain de réticulation est dans la plage de 1x10⁻⁵ à 1x10⁻⁴ M, de préférence 5x10⁻⁵.

10. Procédé selon la revendication 8 ou 9, **caractérisé en ce que** le bain de coagulation est constitué d'un mélange d'un alcool et d'un acide organique et le bain de réticulation est constitué d'un mélange d'un alcool et de l'acide lactique et du catalyseur de palladium actif.

11. Procédé selon la revendication 10, **caractérisé en ce que** l'alcool dans le bain de réticulation est choisi parmi le méthanol, l'éthanol et l'isopropanol.

12. Procédé selon l'une quelconque des revendications précédentes, **caractérisé en ce que** la réticulation est effectuée aux températures comprises entre 25 et 100°C, de préférence de 60°C.

13. Hydrogel selon la formule A ou B, 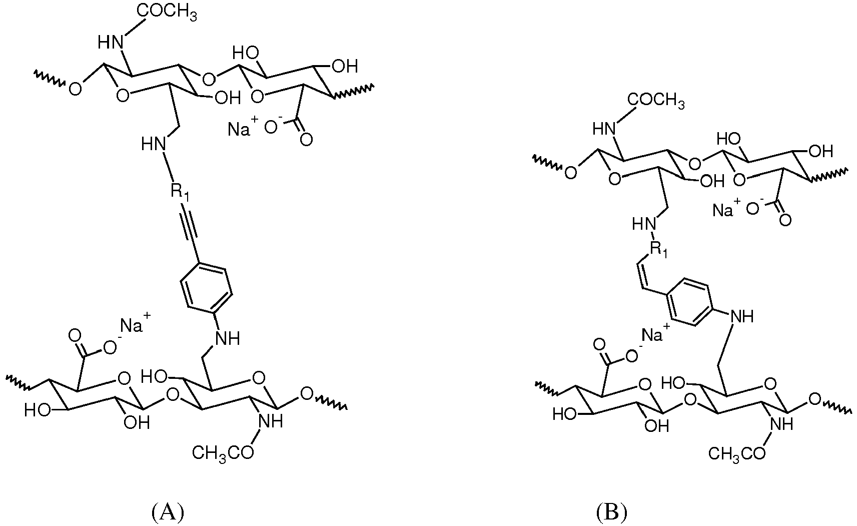 dans laquelle R₁ représente un substituant aliphatique C₁₋₁₅.

14. L'hydrogel selon la revendication 13, **caractérisé en ce que** R₁ est un méthylène ou éthylène.

15. Un microfibre à base d'un dérivé d'un hyaluronane selon la formule A ou B, 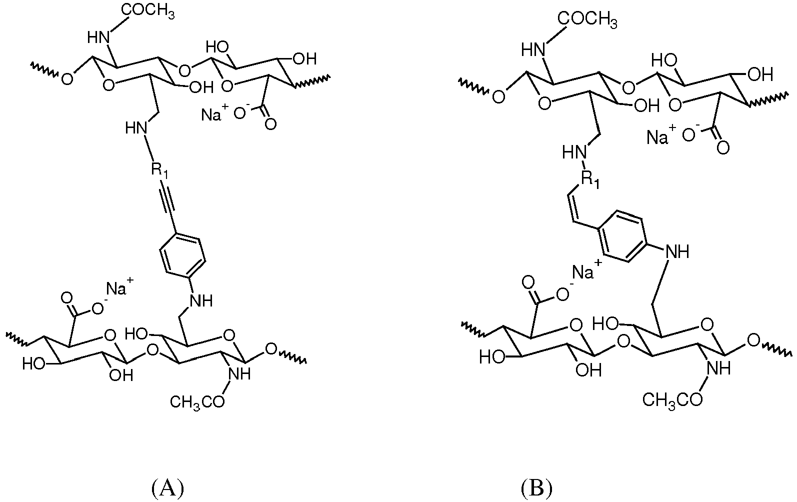 dans laquelle R₁ représente un substituant aliphatique C₁₋₁₅.

16. Le microfibre selon la revendication 15, **caractérisé en ce qu'**il a le diamètre dans la plage de 100 à 300 microns.
